# EUROPÄISCHE PATENTANMELDUNG

(11) **EP 2 085 800 A1**
(43) Veröffentlichungstag der Anmeldung: **05.08.2009**
(21) Anmeldenummer: 08001897.1
(22) Anmeldetag: 01.02.2008
(51) Int. Cl.: G02B 6/00, F21V 8/00, H04M 1/22

(54) **Optische Anzeigeeinrichtung und Automatisierungsgerät**

(71) Anmelder: SIEMENS AKTIENGESELLSCHAFT, 80333 München (DE)
(72) Erfinder: Bergmann, Martin, 92253 Schnaitenbach (DE); Reinhard, Alexander, 92355 Velburg/Dürn (DE); Schmelz, Jürgen, 90518 Altdorf (DE)

(57) **Zusammenfassung**

Die Erfindung betrifft eine optische Anzeigeeinrichtung (1) mit einem in einer Öffnung (2) eines Gehäuses (3) eine Leuchtfläche (5) bildenden sichtbar angeordnetem ersten Ende (7a) eines Lichtwellenleiters (9), einem lichtemittierenden Element (11), wobei das Licht von einem zweiten Ende (7b) des Lichtwellenleiters (9) zu dem ersten Ende (7a) des Lichtwellenleiters (9) geleitet wird und dort aus dem Lichtwellenleiter (9) austritt. Dadurch, dass ein Anzeigemittel oberhalb der Öffnung (2) derart angeordnet ist, dass das austretende Licht zumindest teilweise von dem Anzeigemittel reflektiert wird, wird der Blickwinkel, in dem eine Leuchtfläche (5) erfassbar ist, erhöht. Eine im Gehäuse (3) angeordnete Leuchtfläche (5) kann dadurch auch von einem Bediener eines Automatisierungsgerätes (20) seitlich erfasst werden.

## Beschreibung

Die Erfindung betrifft eine optische Anzeigeeinrichtung mit einem in einer Öffnung eines Gehäuses eine Leuchtfläche bildenden sichtbar angeordnetem ersten Ende eines Lichtwellenleiters, einem lichtemittierenden Element, wobei das Licht von einem zweiten Ende des Lichtwellenleiters zu dem ersten Ende des Lichtwellenleiters geleitet wird und dort aus dem Lichtwellenleiter austritt.

Des Weiteren betrifft die Erfindung eine Automatisierungskomponente.

Es ist bekannt, bei in der Oberschale eines Gehäuses bzw. in einer Gehäusekappe von elektrischen Geräten, wie beispielsweise Automatisierungskomponenten, einen oder mehrere Ausschnitte oder Öffnungen zur Aufnahme optischer Anzeigemittel, wie Leuchtdiodenanzeigen oder Anzeigen über Lichtwellenleiter, vorzusehen, die beispielsweise die Funktion oder den Status des Gerätes anzeigen.

Aus DE 299 12 688 U1 ist eine optische Anzeigeeinrichtung mit einem in einer Öffnung eines Gehäuses angeordneten Anzeigeelement, einem auf einer Leiterplatte angeordneten lichtemittierenden Element und einem die Lichtwellen vom lichtemittierenden Element zum Anzeigeelement leitenden Lichtwellenleiter bekannt. Als Anzeigeeinrichtung wird ein Einlegebauteil aus einer Lichtwellen leitenden Platte in die Gehäuseschale integriert. Das Anzeigeelement ist aus zueinander winklig stehenden Stirnkanten eines Lichtwellenleiters gebildet. Die über Eck verlaufenden Stirnkanten des Anzeigeelementes ermöglichen einen besonders großen Erkennungsbereich des Anzeigeelementes, so dass dies sowohl von vorne als auch von der Seite zu erkennen ist. Nachteilig an dieser Anordnung ist, dass das Licht über eine relativ große Fläche verteilt wird und somit an Intensität für den Betrachter verliert. Weiterhin ist es nachteilig, dass die Herstellung eines über Eck verlaufenden Lichtwellenleiters relativ aufwändig und kostenintensiv ist.

Der Erfindung liegt die Aufgabe zugrunde, eine kostengünstige Anzeigeeinrichtung bereitzustellen, welche zudem ein sicheres Erkennen einer aktiven Leuchtfläche, beispielsweise auch von der Seite ermöglicht.

Die Aufgabe wird durch die eingangs genannte optische Anzeigeeinrichtung dadurch gelöst, dass ein Anzeigemittel oberhalb der Öffnung derart angeordnet ist, dass das austretende Licht zumindest teilweise von dem Anzeigemittel reflektiert wird. Durch das Anzeigemittel wird auf vorteilhafte Art und Weise eine Richtungsumlenkung des aus der Leuchtfläche austretenden Lichtes geschaffen. Durch das Anzeigemittel wird der ansonsten nach oben gerichtete Lichtstrahl nun teilweise seitlich ausgelenkt. Dies ermöglicht, dass die Anzeige aus einem wesentlich vergrößerten Blickwinkel, gegenüber dem Blickwinkel bei nur in einer Richtung abgestrahltem Licht, sich betrachten lässt. Ist beispielsweise in einer Industrieanlage in einem Schaltschrank eine Vielzahl von Automatisierungsgeräten über mehrere Ebenen verteilt, so erleichtert es dem Bedienpersonal die sichere Erkennung der Anzeigeelemente.

In einer bevorzugten Ausgestaltung ist das Anzeigemittel als eine Fläche ausgestaltet, welche die sichtbare Leuchtfläche vergrößert. Diese Fläche kann beispielsweise ein oberhalb der Öffnung angebrachter Spiegel sein. Eine auf einem Gehäusevorsprung angebrachte reflektierende Folie ist auch denkbar. Auf vorteilhafte Art und Weise kann ein Gehäuseteil oder eine Gehäuseoberschale so konstruiert werden, dass die reflektierende Fläche bereits bei der Herstellung der Gehäuseoberschale in dem Gehäuse integriert ist.

Weiterhin ist es vorteilhaft, dass das Anzeigemittel mit seiner Fläche senkrecht zur Leuchtfläche des ersten Endes des Lichtwellenleiters angeordnet ist. Diese Anordnung ermöglicht dem Betrachter ein Erkennen der Anzeige auch bei einem Standpunkt zum Gerät, bei dem er nicht unmittelbar auf die Anzeigeeinrichtung schaut.

Eine weitere Optimierung für das sichere Erkennen des Anzeigemittels von der Seite wird dadurch erreicht, dass das Anzeigemittel mit seiner Fläche in einem Winkel < 90° zur Leuchtfläche des ersten Endes des Lichtwellenleiters angeordnet ist. Vorzugsweise wird das Anzeigemittel in einem Winkel von 90° bis 80°, insbesondere in einem Winkel von 80° bis 70° angeordnet. Ein Teil der Lichtmenge kann so mit der gleichen Intensität zur Seite umgelenkt werden.

Für einen sicheren Einbau des Lichtwellenleiters in das Gehäuse ist es von Vorteil, dass der Lichtwellenleiter aus einem Lichtwellen leitenden Formteil besteht, dessen eine Stirnkante in der Gehäuseöffnung angeordnet ist und dessen andere Stirnkante auf das lichtemittierende Element ausgerichtet ist. Das lichtemittierende Element ist dabei auf einer Leiterplatte angeordnet.

In einer bevorzugten Ausgestaltungsvariante der Erfindung ist es von Vorteil, dass die Fläche ein baulicher Bestandteil des Gehäuses ist. Je nach später geforderter Blickrichtung auf die Anzeigeeinrichtung kann die für die spiegelnde Fläche benötigte bauliche Ergänzung des Gehäuses bei der Konstruktion an verschiedenen Stellen angebracht werden.

In einer weiteren Ausgestaltung der Erfindung weist das Anzeigemittel mehrere Flächen auf. Die erfindungsgemäße optische Anzeigeeinrichtung wird mit Vorteil in einem Automatisierungsgerät eingesetzt. Grundsätzlich ist aber auch der Einsatz in jeglicher Art von Kommunikationsgeräten oder Netzverbindungseinrichtungen möglich.

Die Zeichnung zeigt ein Ausführungsbeispiel einer erfindungsgemäßen Anzeigeeinrichtung. Dabei zeigt:

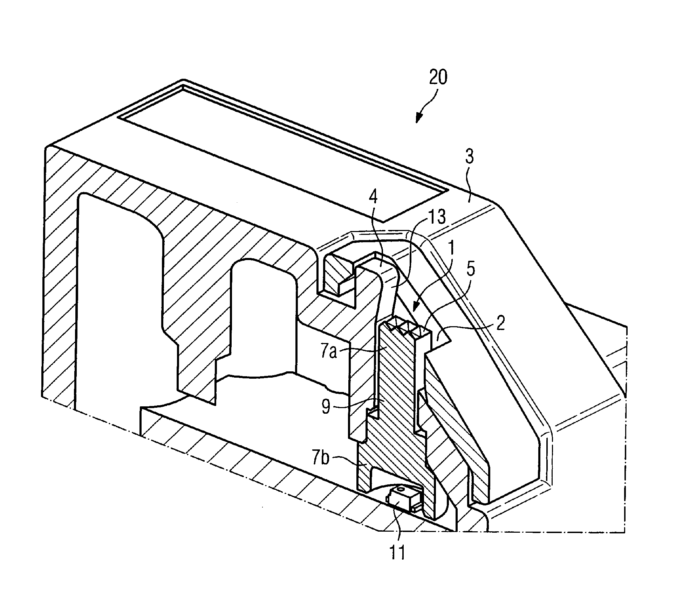

- FIG 1: ein Ausschnittsdetail einer Anzeigeeinrichtung eines Automatisierungsgerätes.

Gemäß FIG 1 ist eine Anzeigeeinrichtung 1 in einer Oberschale eines Gehäuses 3 eines Automatisierungsgerätes 20 dargestellt. Das Gehäuse 3 besteht aus einem Kunststoffspritzgussteil. Dieses Gehäuse 3 ist mit all seinen Vorsprüngen und Ausnehmungen aus einem Teil gefertigt. Mittels einer Öffnung 2 im Gehäuse 3 ist ein Lichtwellenleiter 9 mit seinem ersten Ende 7a innerhalb der Öffnung 2 angeordnet. Das über eine Leuchtfläche 5 am ersten Ende 7a des Lichtwellenleiters 9 austretende Licht wird über ein am zweiten Ende 7b des Lichtwellenleiters 9 angeordnetes lichtemittierendes Element 11 in den Lichtwellenleiter 9 eingespeist. Das lichtemittierende Element 11 ist eine LED, welche auf einer innerhalb des Gehäuses 3 angeordneten Platine befestigt ist. Zur Verbesserung der Wahrnehmung einer Anzeige der Anzeigeeinrichtung 1 weist die Leuchtfläche 5 eine strukturierte Oberfläche auf. Um den Blickwinkel bzw. den Erfassungswinkel für die Erkennung einer Anzeige der Anzeigeeinrichtung 1 zu erhöhen, ist seitlich oberhalb der Leuchtfläche 5 des Lichtwellenleiters 9 eine spiegelnde Fläche 13 angeordnet. Die spiegelnde Fläche 13 wird von einem Zapfen 4 getragen, welcher Bestandteil des Gehäuses 3 ist. Die spiegelnde Fläche 13 ist in einem Winkel von ca. 70° zu der Leuchtfläche 5 angeordnet. Durch diese An- ordnung wird ein wesentlicher Teil des über die Leuchtfläche 5 austretenden Lichtes an der spiegelnden Fläche 13 reflektiert und seitlich zum Gehäuse 3 ausgesendet. Ein vorher eingeschränkter Blickwinkel von einigen Winkelgraden wird nun durch die spiegelnde Fläche 13 um ein Vielfaches erhöht.

Damit der Lichtwellenleiter 9 in dem Gehäuse 3 sicher eingebaut ist, weist er mehrere Vorsprünge auf, welche mit in dem Gehäuse 3 eingearbeiteten Widerlager zusammenwirken. Der Lichtwellenleiter 9 ist derart in die Öffnung 2 eingepasst, so dass weder Staub noch Feuchtigkeit über die Öffnung 2 in das Gehäuse 3 eindringen können. Je nach Winkel und Höhe der spiegelnden Fläche 13 kann die zur Leuchtfläche 5 durch die spiegelnde Fläche 13 zusätzlich leuchtende Fläche vergrößert oder verkleinert werden. Je nach geforderter Blickrichtung kann die spiegelnde Fläche 13 an verschiedenen Stellen oberhalb der Öffnung 2 im Gehäuse 3 angebracht werden.

## Patentansprüche

1. Optische Anzeigeeinrichtung (1) mit einem in einer Öffnung (2) eines Gehäuses (3) eine Leuchtfläche (5) bildenden sichtbar angeordnetem ersten Ende (7a) eines Lichtwellenleiters (9), einem lichtemittierenden Element (11), wobei das Licht von einem zweiten Ende (7b) des Lichtwellenleiters (9) zu dem ersten Ende (7a) des Lichtwellenleiters (9) geleitet wird und dort aus dem Lichtwellenleiter (9) austritt,
**dadurch gekennzeichnet, dass** ein Anzeigemittel oberhalb der Öffnung (2) derart angeordnet ist, dass das austretende Licht zumindest teilweise von dem Anzeigemittel reflektiert wird.

2. Anzeigeeinrichtung (1) nach Anspruch 1, wobei das Anzeigemittel als eine Fläche (13) ausgestaltet ist, welche die sichtbare Leuchtfläche (5) vergrößert.

3. Anzeigeeinrichtung (1) nach Anspruch 2, wobei das Anzeigemittel mit seiner Fläche (13) senkrecht zur Leuchtfläche (5) des ersten Endes (7a) des Lichtwellenleiters (9) angeordnet ist.

4. Anzeigeeinrichtung (1) nach Anspruch 2 , wobei das Anzeigemittel mit seiner Fläche (13) in einem Winkel kleiner als 90 Grad zur Leuchtfläche (5) des ersten Endes (7a) des Lichtwellenleiters (9) angeordnet ist.

5. Anzeigeeinrichtung (1), nach einem der Ansprüche 1 bis 4,
wobei der Lichtwellenleiter (9) aus einem Lichtwellen leitenden Formteil besteht dessen eine Stirnkante in der Gehäuseöffnung (2) angeordnet ist und dessen andere Stirnkante auf das lichtemittierenden Element (11) ausgerichtet ist.

6. Anzeigeeinrichtung (1), nach einem der Ansprüche 1 bis 5,
wobei die Fläche (13) baulicher Bestandteil des Gehäuses (3) ist.

7. Anzeigeeinrichtung (1), nach einem der Ansprüche 1 bis 6,
wobei das Anzeigemittel mehrere Flächen (13) aufweist.

8. Automatisierungsgerät (20) aufweisend eine optische Anzeigeeinrichtung (1) nach einem der Ansprüche 1 bis 7.
